(19) Europäisches Patentamt
European Patent Office
Office européen des brevets

(11) **EP 4 572 449 A1**

(12) **EUROPEAN PATENT APPLICATION**
published in accordance with Art. 153(4) EPC

(43) Date of publication:
**18.06.2025  Bulletin 2025/25**

(21) Application number: **22954358.2**

(22) Date of filing: **09.08.2022**

(51) International Patent Classification (IPC):
**H04W 68/02** (2009.01)

(86) International application number:
**PCT/CN2022/111272**

(87) International publication number:
**WO 2024/031382 (15.02.2024 Gazette 2024/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventor: **LI, Yanhua**
**Beijing 100085 (CN)**

(74) Representative: **Dehns Germany Partnerschaft
mbB**
**Theresienstraße 6-8**
**80333 München (DE)**

(54) **INFORMATION TRANSMISSION METHOD AND APPARATUS, COMMUNICATION DEVICE,
AND STORAGE MEDIUM**

(57)    Embodiments of the present disclosure provide an information transmission method and apparatus, a communication device, and a storage medium. A base station determines a paging earlier indication (PEI) parameter set associated with a specific downlink initial bandwidth part (BWP), wherein the PEI parameter set is at least used for a user equipment (UE) to determine a monitoring resource of a PEI associated with the specific downlink initial BWP.

FIG. 2

**Description**

**TECHNICAL FIELD**

The present disclosure relates to, but is not limited to, the field of communication technology, and in particular, relates to an information transmitting method and device, a communication device, and a storage medium.

**BACKGROUND**

Currently, the 3rd Generation Partnership Project (3GPP) has research on the Reduced Capability NR Device (REDCAP) project, in order to reduce the complexity of UE and save the costs when a R15 (3GPP Release 15) or R16 (3GPP Release 16) user equipment (UE) is also present.
A reduced capability UE usually has a smaller number of antennas and limited size, which includes characteristics of:

low cost and low complexity;
certain coverage enhancement;
power saving;
1RX or 2RX in some terminals; and
further reduced bandwidth.

**SUMMARY**

Embodiments of the present disclosure discloses an information transmitting method and device, a communication device, and a storage medium.
A first aspect of the present disclosure provides an information transmitting method performed by a base station, including:
determining a paging earlier indication (PEI) parameter set associated with a specific downlink initial bandwidth part (BWP), wherein the PEI parameter set is at least configured for a user equipment (UE) to determine a monitoring resource for a PEI associated with the specific downlink initial BWP.
In an embodiment, the method further includes:
sending, to the UE, the PEI monitoring indication information indicating the PEI parameter set.
In an embodiment, the specific downlink initial BWP includes at least one of:

a downlink initial BWP configured with a paging search space;
a downlink initial BWP including a transmission resource of a first type of control resource set #0 (CORESET#0), wherein the first type of CORESET#0 is associated with at least a first type of UE;
a downlink initial BWP including a transmission resource of a second type of CORESET#0, wherein the second type of CORESET#0 is associated with a second type of UE, and the first type of UE is different from the second type of UE;
a downlink initial BWP configured with a cell defining-synchronization signal block/physical broadcast channel block (CD-SSB);
a downlink initial BWP configured with a non cell defining-synchronization signal block/physical broadcast channel block (NCD-SSB);
a downlink initial BWP including the transmission resource of the first type of CORESET#0 and configured with the CD-SSB; or
a downlink initial BWP including the transmission resource of the second type of CORESET#0 and configured with the CD-SSB.

In an embodiment, the specific downlink initial BWP includes a downlink initial BWP for a second type of UE, and the downlink initial BWP for the second type of UE is different from a downlink initial BWP used by a first type of UE.
In an embodiment, the second type of UE includes at least one of:

a reduced capability UE; or
an enhanced reduced capability UE.

A second aspect of the present disclosure provides an information transmitting method performed by a user equipment (UE), including:
receiving paging earlier indication (PEI) monitoring indication information sent by a base station, wherein the PEI monitoring indication information indicates a PEI parameter set, and the PEI parameter set is associated with a specific downlink initial BWP, and is at least configured for the UE to determine a monitoring resource for a PEI associated with the specific downlink initial BWP.

In an embodiment, the specific downlink initial BWP includes at least one of:

a downlink initial BWP configured with a paging search space;

a downlink initial BWP including a transmission resource of a first type of control resource set #0 (CORESET#0), wherein the first type of CORESET#0 is associated with at least a first type of UE;

a downlink initial BWP including a transmission resource of a second type of CORESET#0, wherein the second type of CORESET#0 is associated with a second type of UE, and the first type of UE is different from the second type of UE;

a downlink initial BWP configured with a cell defining-synchronization signal block (CD-SSB);

a downlink initial BWP configured with a non cell defining-synchronization signal block (NCD-SSB);

a downlink initial BWP including the transmission resource of the first type of CORESET#0 and configured with the CD-SSB; or

a downlink initial BWP including the transmission resource of the second type of CORESET#0 and configured with the CD-SSB.

In an embodiment, the specific downlink initial BWP includes a downlink initial BWP for a second type of UE, and the downlink initial BWP for the second type of UE is different from a downlink initial BWP used by a first type of UE.

In an embodiment, the second type of UE includes at least one of:

a reduced capability UE; or

an enhanced reduced capability UE.

In an embodiment, the method further includes:

monitoring the PEI on the specific downlink initial BWP having the PEI parameter set.

A third aspect of the present disclosure provides an information transmitting device provided in a base station, including:

a processing module, configured to determine a paging earlier indication (PEI) parameter set associated with a specific downlink initial BWP, wherein the PEI parameter set is at least configured for a user equipment (UE) to determine a monitoring resource for a PEI associated with the specific downlink initial BWP.

In an embodiment, the device further includes:

a transceiver module, configured to send, to the UE, the PEI monitoring indication information indicating the PEI parameter set.

In an embodiment, the specific downlink initial BWP includes at least one of:

a downlink initial BWP configured with a paging search space;

a downlink initial BWP including a transmission resource of a first type of control resource set #0 (CORESET#0), wherein the first type of CORESET#0 is associated with at least a first type of UE;

a downlink initial BWP including a transmission resource of a second type of CORESET#0, wherein the second type of CORESET#0 is associated with a second type of UE, and the first type of UE is different from the second type of UE;

a downlink initial BWP configured with a cell defining-synchronization signal block (CD-SSB);

a downlink initial BWP configured with a non cell defining-synchronization signal block (NCD-SSB);

a downlink initial BWP including the transmission resource of the first type of CORESET#0 and configured with the CD-SSB; or

a downlink initial BWP including the transmission resource of the second type of CORESET#0 and configured with the CD-SSB.

In an embodiment, the specific downlink initial BWP includes a downlink initial BWP for a second type of UE, and the downlink initial BWP for the second type of UE is different from a downlink initial BWP used by a first type of UE.

In an embodiment, the second type of UE includes at least one of:

a reduced capability UE; or

an enhanced reduced capability UE.

A fourth aspect of the present disclosure provides an information transmitting device provided in a user equipment (UE), including:

a transceiver module, configured to receive paging earlier indication (PEI) monitoring indication information sent by a base station, wherein the PEI monitoring indication information indicates a PEI parameter set, and the PEI parameter set is associated with a specific downlink initial BWP, and is at least configured for the UE to determine a monitoring resource for a PEI associated with the specific downlink initial BWP.

In an embodiment, the specific downlink initial BWP includes at least one of:

a downlink initial BWP configured with a paging search space;
a downlink initial BWP including a transmission resource of a first type of control resource set #0 (CORESET#0), wherein the first type of CORESET#0 is associated with at least a first type of UE;
a downlink initial BWP including a transmission resource of a second type of CORESET#0, wherein the second type of CORESET#0 is associated with a second type of UE, and the first type of UE is different from the second type of UE;
a downlink initial BWP configured with a cell defining-synchronization signal block (CD-SSB);
a downlink initial BWP configured with a non cell defining-synchronization signal block (NCD-SSB);
a downlink initial BWP including the transmission resource of the first type of CORESET#0 and configured with the CD-SSB; or
a downlink initial BWP including the transmission resource of the second type of CORESET#0 and configured with the CD-SSB.

In an embodiment, the specific downlink initial BWP includes a downlink initial BWP for a second type of UE, and the downlink initial BWP for the second type of UE is different from a downlink initial BWP used by a first type of UE.

In an embodiment, the second type of UE includes at least one of:

a reduced capability UE; or
an enhanced reduced capability UE.

In an embodiment, the device further includes:
a transceiver module, configured to monitor the PEI on the specific downlink initial BWP having the PEI parameter set.

A fifth aspect of the present disclosure provides a communication device, including:

a processor; and
a memory storing executable instructions of the processor,
wherein the processor is configured to implement the information transmitting method according to the first aspect or the second aspect by running the executable instructions.

A sixth aspect of the present disclosure provides a computer storage medium having a computer executable program stored thereon that, when being executed by a processor, implements the information transmitting method according to the first aspect or the second aspect.

The technical solution provided by the embodiments of the present disclosure may include the following beneficial effects.

In the embodiments of the present disclosure, a base station determines a paging earlier indication (PEI) parameter set associated with a specific downlink initial bandwidth part (BWP), wherein the PEI parameter set is at least configured for a user equipment (UE) to determine a monitoring resource for a PEI associated with the specific downlink initial BWP. Therefore, instead of that a plurality of downlink initial BWP use a same PEI parameter set, the specific downlink initial BWP may be individually configured with the PEI parameter set by determining the PEI parameter set associated with the specific downlink initial BWP, which improves the configuration flexibility of the PEI parameter set and meets the requirements of different downlink initial BWPs for PEI parameter sets.

It is to be understood that the above general description and the following detailed description are only exemplary and explanatory, which do not limit the embodiments of the present disclosure.

## BRIEF DESCRIPTION OF THE DRAWINGS

FIG. 1 is a schematic diagram of a structure of a wireless communication system.
FIG. 2 is a schematic diagram of a base station switching process according to an exemplary embodiment.
FIG. 3 is a flowchart of an information transmitting method according to an exemplary embodiment.
FIG. 4 is a flowchart of an information transmitting method according to an exemplary embodiment.
FIG. 5 is a flowchart of an information transmitting method according to an exemplary embodiment.
FIG. 6 is a flowchart of an information transmitting method according to an exemplary embodiment.

FIG. 7 is a block diagram of an information transmitting device according to an exemplary embodiment.
FIG. 8 is a block diagram of an information transmitting device according to an exemplary embodiment.
FIG. 9 is a block diagram of a UE according to an exemplary embodiment.
FIG. 10 is a block diagram of a base station according to an exemplary embodiment.

## DETAILED DESCRIPTION

Exemplary embodiments will be described herein in detail, examples of which are represented in the accompanying drawings. When the following description relates to the accompanying drawings, the same numerals in the different figures indicate the same or similar elements unless otherwise indicated. The implementations described in the following exemplary embodiments do not represent all implementations consistent with the embodiments of the present disclosure. Rather, they are only examples of devices and methods consistent with some aspects of embodiments of the present disclosure as detailed in the appended claims.

The term used in the embodiments of the present disclosure is used solely for the purpose of describing particular embodiments and is not intended to limit the embodiments of the present disclosure. The singular forms such as "a", "this" used in the embodiments of the present disclosure and the appended claims are also intended to encompass the plural forms, unless clearly indicated otherwise in the context. It is to be also understood that the term "and/or" as used herein refers to and encompasses any or all possible combinations of one or more of the associated listed items.

It is to be understood that while the terms first, second, third, etc. may be used in the embodiments of the present disclosure to describe various types of information, such information should not be limited to these terms. These terms are only used to distinguish the same type of information from one another. For example, without departing from the scope of the embodiments of the present disclosure, first information may also be referred to as second information, and similarly, the second information may be referred to as the first information. Depending on the context, the word "if" as used herein may be interpreted as "at the time of ......" or "when ......" or "in response to determining".

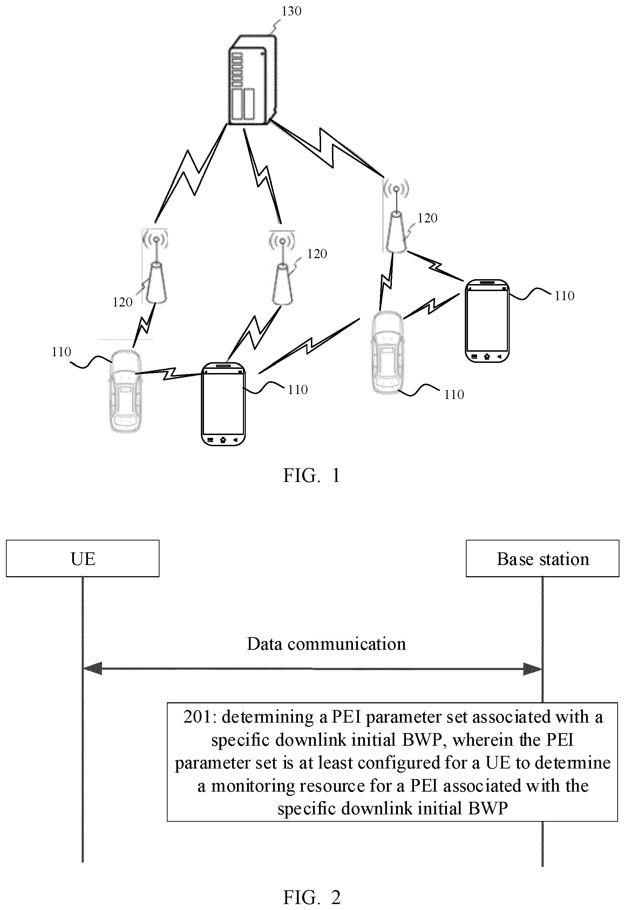

Referring to FIG. 1, a schematic diagram of a structure of a wireless communication system according to an embodiment of the present disclosure is illustrated. As shown in FIG. 1, the wireless communication system is a communication system based on cellular mobile communication technology, and the wireless communication system may include a plurality of user equipments 110 and a plurality of base stations 120.

The user equipment 110 may be a device that provides voice and/or data connectivity to a user. The user equipment 110 may communicate with one or more core networks via a radio access network (RAN). The user equipment 110 may be an IoT user equipment, such as sensor device, mobile phone (or so-called 'cellular' phone), and computer with a IoT user equipment, which may be, for example, fixed, portable, pocket-sized, handheld, computer-integrated, or vehicle-mounted device, for example, a station (STA), a subscriber unit, a subscriber station, a mobile station, a mobile, a remote station, an access point, a remote terminal, an access terminal, a user terminal, a user agent, a user device or a user equipment (UE). Alternatively, the user equipment 110 may be an unmanned aerial vehicle device. Alternatively, the user equipment 110 may be an in-vehicle device, e.g., it may be a trip computer with a wireless communication capability, or a wireless user equipment externally connected to a trip computer. Alternatively, the user equipment 110 may be a roadside device, e.g., it may be a street light, a signal light, or other roadside devices having a wireless communication capability.

The base station 120 may be a network-side device in the wireless communication system. The wireless communication system may be the 4th generation mobile communication system, also known as a long term evolution (LTE) system, or may be a 5G system, also known as a new radio (NR) system or 5G NR system. Alternatively, the wireless communication system may be a further next generation system of the 5G system. The access network in the 5G system may be called new generation-radio access network (NG-RAN).

The base station 120 may be an evolved base station (eNB) used in the 4G system. Alternatively, the base station 120 may be a base station (gNB) of a centralized distributed architecture used in the 5G system. When the base station 120 uses the centralized distributed architecture, it typically includes a central unit (CU) and at least two distributed units (DUs). The central unit is provided with a protocol stack of packet data convergence protocol (PDCP) layer, radio link control (RLC) layer, and media access control (MAC) layer, and the distributed unit is provided with a protocol stack of physical (PHY) layer. The specific implementation of the base station 120 is not limited in the embodiments of the present disclosure.

A wireless connection may be established between the base station 120 and the user equipment 110 via a wireless radio. In various implementations, the wireless radio is a wireless radio based on the 4th generation mobile communication network technology (4G) standard; alternatively, the wireless radio is a wireless radio based on the 5th generation mobile communication network technology (5G) standard, for example, the wireless radio is the new radio; alternatively, the wireless radio may be a wireless radio based on a further next generation mobile communication network technology standard based on the 5G.

In some embodiments, an E2E (End to End) connection may also be established between the user equipments 110, examples of which include vehicle to vehicle (V2V) communication, vehicle to infrastructure (V2I) communication, and vehicle to pedestrian (V2P) communication in a vehicle to everything (V2X) scenario or the like.

Here, the above user equipment may be considered as the terminal device in the following embodiments.

In some embodiments, the wireless communication system described above may further include a network management device 130.

A number of base stations 120 are each connected to the network management device 130. The network management device 13 may be a core network device in the wireless communication system. For example, the network management device 130 may be a mobility management entity (MME) in the evolved packet core (EPC). Alternatively, the network management device may be other core network devices such as a serving gateway (SGW), a public data network gateway (PGW), a policy and charging rules function Unit (PCRF), or a home subscriber server (HSS). The implementation form of the network management device 130 is not limited in the embodiments of the present disclosure.

In order to facilitate the understanding of a person skilled in the art, the embodiments of the present disclosure provide a plurality of implementations to clearly illustrate the technical solutions of the embodiments of the present disclosure. Of course, a person skilled in the art may understand that a plurality of embodiments provided in the embodiments of the present disclosure may be executed alone, or may be executed in combination with the methods of other embodiments among the embodiments of the present disclosure, or may be executed alone or in combination with some methods in other related technologies, which is not specifically limited in the embodiments of the present disclosure.

After the Redcap UE is introduced, an uplink initial BWP or a downlink initial BWP in SIB 1 may be separately configured for the Redcap UE. Usually, the Redcap UE preferentially uses the uplink initial BWP/downlink initial BWP separately configured for the Redcap UE. Only in a scenario in which the network does not separately configure the uplink initial BWP/downlink initial BWP for the Redcap UE, the Redcap UE may use the uplink initial BWP/downlink initial BWP of the legacy UE.

The downlink initial BWP separately configured for the Redcap UE may be initialDownlinkBWP-RedCap, and the downlink initial BWP configured for legacy UE (all kinds of UE) may be initialDownlinkBWP.

If the initialDownlinkBWP-RedCap is present, the RedCap UE uses this initialDownlinkBWP-RedCap instead of the initialDownlinkBWP. If the locationAndBandwidth of this initialDownlinkBWP-RedCap contains the entire CORESET#0, the RedCap UE applies the locationAndBandwidth upon reception of this field (e.g., to determine the frequency position of signals described in relation to this locationAndBandwidth) but it keeps CORESET#0 until reception of RRCSetup/RRCResume/RRC Reestablishment. Otherwise, i.e., if the locationAndBandwidth of this BWP does not contain the entire CORESET#0, the UE uses this BWP for receiving DL messages during initial access (Msg2, MsgB, Msg4) and after initial access.

If the initialDownlinkBWP-RedCap is absent, the RedCap UE uses the initialDownlinkBWP provided that it does not exceed the RedCap UE maximum bandwidth.

It can be seen that when the bandwidth of initialDownlinkBWP-RedCap includes the entire CORESET#0, the terminal will use this initial BWP after receiving the RRC message, and will use the CORESET#0 before receiving the RRC message. However, if the bandwidth of this initial BWP does not include the entire CORESET#0, the terminal uses this initial BWP for receiving message (Msg2, MsgB, Msg4) during random access.

The control channel configuration on the initial BWP is specified as follows.

That is, if the downlink initial BWP does not include CORESET#0 and CD-SSB, the downlink initial BWP is not allowed to include a search space for paging message and a search space for system message (including SIB1 and other SIB messages).

A paging earlier indication (PEI) is introduced for user paging, which is employed to instruct the UE whether to monitor subsequent paging occasion (PO). The PEI may carry paging grouping information. A PEI parameter set may be broadcasted in a system message, i.e., the PEI is shared by a plurality of downlink initial BWPs.

However, not all downlink initial BWPs have CD-SSB, etc., i.e., not all downlink initial BWPs may be configured with paging messages. In R18 standard, i.e., for enhanced reduced capability (e-Redcap) UEs in R18 standard, not all initial BWPs have CD-SSB.

Therefore, how to configure the PEI parameter set under different downlink initial BWP configurations and how to realize the corresponding PEI configuration for downlink initial BWPs with different configurations are an urgent problem to be solved.

As shown in FIG. 2, an embodiment of the present disclosure provides an information transmitting method performed by a base station, which includes:

step 201, determining a paging earlier indication (PEI) parameter set associated with a specific downlink initial BWP, wherein the PEI parameter set is at least configured for a UE to determine a monitoring resource for a PEI associated with the specific downlink initial BWP.

Here, the monitoring resource indicated by the PEI parameter set includes, but is not limited to, at least one of a search space for PEI monitoring or a first monitoring occasion of PEI.

In a possible implementation, the specific downlink initial BWP may include at least one of:

a specific downlink initial BWP;

a downlink initial BWP for a specific type of UE; or

a downlink initial BWP that satisfies a predetermined condition.

In a possible implementation, the downlink initial BWP that satisfies the predetermined condition may include a downlink initial BWP capable of configuring a paging message.

In a possible implementation, the PEI parameter sets associated with different specific downlink initial BWPs are different from each other.

Determining the PEI parameter set associated with the specific downlink initial BWP may include: determining a corresponding PEI parameter set for each downlink initial BWP. That is, one PEI parameter set corresponds to one downlink initial BWP.

In a possible implementation, the base station may also configure a common PEI parameter set for a plurality of downlink initial BWPs. That is, the monitoring resource for the PEI in one downlink initial BWP include: a part indicated by the common PEI parameter set, and another part indicated by the PEI parameter set configured individually for the PEI of the downlink initial BWP.

In a possible implementation, the PEI parameter set used by the base station and the terminal may be divided into two parts, i.e. a parameter set 1 configured to be common for a plurality of downlink initial BWPs, and a parameter set 2 individually configured for the PEI of a specific downlink initial BWP.

In a possible implementation, the PEI parameter set 1 (pei-Config) is carried by DownlinkConfigCommonSIB.

In a possible implementation, the PEI parameter set 2 may be carried by PDCCH-ConfigCommon. Here, the PDCCH-ConfigCommon may be carried in a system message. For example, the PDCCH-ConfigCommon may be carried in a system information block 1 (SIB1).

In a possible implementation, the PEI parameter set 2 may be carried by pei-ConfigBWP in the PDCCH-ConfigCommon.

Therefore, instead of that a plurality of downlink initial BWP use a same PEI parameter set, the specific downlink initial BWP may be individually configured with the PEI parameter set by determining the PEI parameter set associated with the specific downlink initial BWP, which improves the configuration flexibility of the PEI parameter set and meets the requirements of different downlink initial BWPs for PEI parameter sets.

In an embodiment, the specific downlink initial BWP includes at least one of:

a downlink initial BWP configured with a paging search space;

a downlink initial BWP including a transmission resource of a first type of control resource set #0 (CORESET#0), wherein the first type of CORESET#0 is associated with at least a first type of UE;

a downlink initial BWP including a transmission resource of a second type of CORESET#0, wherein the second type of CORESET#0 is associated with a second type of UE, and the first type of UE is different from the second type of UE;

a downlink initial BWP configured with a cell defining-synchronization signal block (CD-SSB);

a downlink initial BWP configured with a non cell defining-synchronization signal block (NCD-SSB);

a downlink initial BWP including the transmission resource of the first type of CORESET#0 and configured with the CD-SSB; or

a downlink initial BWP including the transmission resource of the second type of CORESET#0 and configured with the CD-SSB.

Here, the PEI parameter set may be conditionally configured, i.e. the PEI parameter set is configured for the downlink initial BWP only if the downlink initial BWP satisfies the above condition.

The PEI parameter set is configured to indicate the monitoring resource of the PEI, and the PEI is configured to indicate to the UE whether it needs to monitor a predetermined PO. Here, the predetermined PO may include one or more POs after the PEI.

Therefore, for the downlink initial BWP, if the UE is required to monitor the PEI, the PEI parameter set is configured. For example, if the downlink initial BWP does not have a paging message, then the UE does not need to monitor the paging message, much less the PEI, and thus the PEI parameter set may not be configured.

Here, the first type of CORESET#0 may be CORESET#0 for the first type of UE and the second type of UE.

The first type of UE may be a non-reduced capability UE, such as an eMMB UE.

The second type of CORESET#0 may be CORESET#0 for the second type of UE. e.g., the second type of CORESET#0 may be CORESET#0 for a reduced capability UE in the 3GPP Release 18 (R18) standard.

In a possible implementation, the downlink initial BWP supported by the first type of UE is greater than or equal to that supported by the second type of UE.

For example, the first type of UE supports a downlink initial BWP greater than or equal to 20 Mhz, and the second type of UE supports a downlink initial BWP less than or equal to 20 Mhz.

In a possible implementation, the bandwidth of the first type of CORESET#0 is greater than the bandwidth of the second type of CORESET#0.

In an embodiment, the second type of UE includes at least one of:

a reduced capability UE; or
an enhanced reduced capability (eRedCap) UE.

For example, when the PEI parameter set associated with the specific downlink initial BWP is configured, the PDCCH-ConfigCommon associated with the downlink initial BWP is required to satisfy the condition indicated by the InitialBWP-Paging field in order to configure the PEI parameter set associated with the specific downlink initial BWP. That is, only when the downlink initial BWP satisfies one of the following conditions, the PEI parameter set associated with the specific downlink initial BWP may be optionally configured on the downlink initial BWP. That is, the downlink initial BWP shall satisfy at least one of the following conditions (i.e., the precondition for configuring) in order to optionally configure the PEI parameter set on that downlink initial BWP:

a paging search space (paging-SearchSpace) being configured;
the location and bandwidth (LocationAndBandwith) of the downlink initial BWP including CORESET#0;
the location and bandwidth (LocationAndBandwith) of the downlink initial BWP including CORESET#0 and the downlink initial BWP including CD-SSB; or
the location and bandwidth (LocationAndBandwith) of the downlink initial BWP including CORESET#0, and the downlink initial BWP including SSB (including CD-SSB and NCD-SSB).

In this way, as the PEI parameter set associated with the specific downlink initial BWP is determined, the UE may be indicated with a monitoring resource for PEI, and thus the UE monitor the PEI and then monitor the PO when needed, which saves UE power. On the other hand, the PEI parameter set is not configured on the downlink initial BWP that may not transmit the paging message, which reduces useless configuration and saves resource.

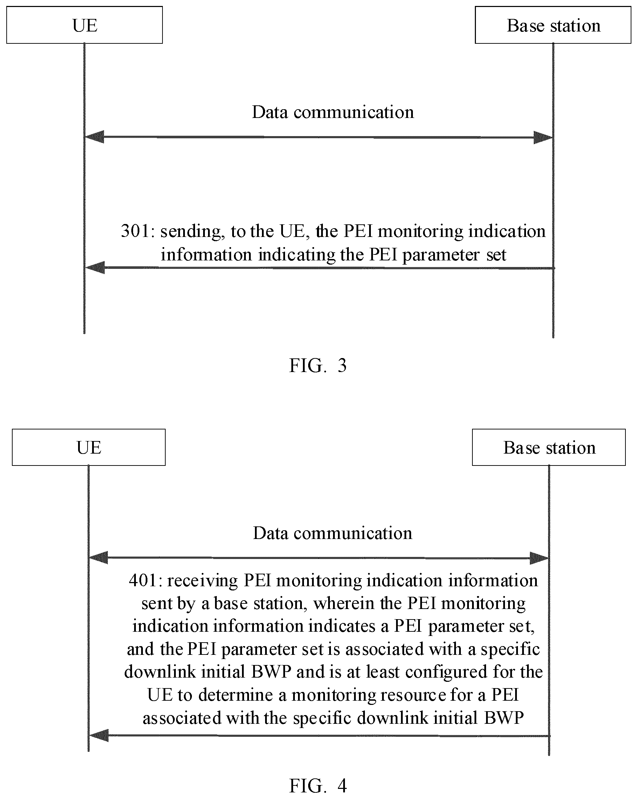

As shown in FIG. 3, an embodiment of the present disclosure provides an information transmitting method performed by a base station, which includes:

step 301, sending, to the UE, the PEI monitoring indication information indicating the PEI parameter set.

Step 301 may be implemented alone or in combination with step 201.

The base station may send the PEI monitoring indication information to the UE, and the UE after receiving the PEI monitoring indication information may determine the PEI parameter set associated with the specific downlink initial BWP.

In an embodiment, the specific downlink initial BWP includes a downlink initial BWP for a second type of UE, and the downlink initial BWP for the second type of UE is different from a downlink initial BWP used by a first type of UE.

In a possible implementation, the bandwidth of the downlink initial BWP for the second type of UE is less than or equal to the bandwidth of the downlink initial BWP used by the first type of UE.

Here, it may only determine the configuration condition for the PEI parameter set of the downlink initial BWP (initialDownlinkBWP-RedCap) for the second type of UE. The second type of UE may include the eRedCap UE in the 3GPP Release 17 (R17) standard and the eRedCap UE in the 3GPP Release 18 (R18) standard.

In a possible implementation, the downlink initial BWP used by the first type of UE already satisfies the above PEI configuration parameter precondition by default.

Due to the diversity of the downlink initial BWP for the second type of UE, e.g. not all downlink initial BWPs for the second type of UE have CD-SSB, therefore, a PEI parameter set may be determined for the downlink initial BWP for the second type of UE that satisfies the condition.

The downlink initial BWP for the second type of UE satisfying the condition is the specific downlink initial BWP described above.

In a possible implementation, the UE monitors the PEI on the specific downlink initial BWP having the PEI parameter set.

The base station may send the PEI monitoring indication information to the UE, so that the UE may determine whether the downlink initial BWP has the PEI parameter set.

If the downlink initial BWP has the PEI parameter set, the UE may monitor the PEI based on the PEI parameter set.

If the downlink initial BWP does not have the PEI parameter set, the UE may not monitor the PEI, e.g., the UE may monitor all POs.

In a possible implementation, the UE selects, based on the type of UE, the specific downlink initial BWP corresponding to the type of UE to monitor the PEI.

The UE may monitor, based on its own type, the specific downlink initial BWP corresponding to its own type.

In a possible implementation, the UE monitors the downlink initial BWP based on a predetermined rule.

The predetermined rule may include that the UE monitors the specific downlink initial BWP corresponding to its own type.

For example, as the RedCap UE supports the downlink initial BWP with a small bandwidth (e.g., less than 20 MHz), the base station may configure a downlink initial BW (e.g., with a bandwidth of 5M) for the RedCap UE. The RedCap UE may select the specific downlink initial BWP for the RedCap UE to monitor the PEI.

In a possible implementation, the UE uses the following expression (1) to determine the specific downlink initial BWP for monitoring the PEI:

$$\text{Index} = \text{UE-ID} \; mod \; \text{N} \quad (1)$$

where the Index denotes the index of the downlink initial BWP corresponding to the PEI monitored by the UE, the UE-ID denotes the identification of the UE, and N denotes the total number of the specific downlink initial BWPs having the PEI parameter set.

There may be a plurality of specific downlink initial BWPs having the PEI parameter set, and the base station may set a paging message for the UE in one of the specific downlink initial BWPs, and the base station may determine, based on the expression (1), the specific downlink initial BWP over which the paging message is to be sent. The UE determines the specific downlink initial BWP based on the same rule and monitors the PEI on the specific downlink initial BWP.

As shown in FIG. 4, an embodiment of the present disclosure provides an information transmitting method performed by a user equipment (UE), which includes:

step 401, receiving PEI monitoring indication information sent by a base station, wherein the PEI monitoring indication information indicates a PEI parameter set, and the PEI parameter set is associated with a specific downlink initial BWP and is at least configured for the UE to determine a monitoring resource for a PEI associated with the specific downlink initial BWP.

Here, the monitoring resource indicated by the PEI parameter set includes, but is not limited to, at least one of a search space for PEI monitoring or a first monitoring occasion of PEI.

In a possible implementation, the specific downlink initial BWP may include at least one of:

a specific downlink initial BWP;
a downlink initial BWP for a specific type of UE; or
a downlink initial BWP that satisfies a predetermined condition.

In a possible implementation, the downlink initial BWP that satisfies the predetermined condition may include a downlink initial BWP capable of configuring a paging message.

In a possible implementation, the PEI parameter sets associated with different specific downlink initial BWPs are different from each other.

Determining the PEI parameter set associated with the specific downlink initial BWP may include: determining a corresponding PEI parameter set for each downlink initial BWP. That is, one PEI parameter set corresponds to one downlink initial BWP.

In a possible implementation, the base station may also configure a common PEI parameter set for a plurality of downlink initial BWPs. That is, the monitoring resource for the PEI in one downlink initial BWP includes: a part indicated by the common PEI parameter set, and another part indicated by the PEI parameter set configured individually for the PEI of the downlink initial BWP.

In a possible implementation, the PEI parameter set used by the base station and the terminal may be divided into two parts, i.e. a parameter set 1 configured to be common for a plurality of downlink initial BWPs, and a parameter set 2 individually configured for the PEI of a specific downlink initial BWP.

In a possible implementation, the PEI parameter set 1 (pei-Config) is carried by DownlinkConfigCommonSIB.

In a possible implementation, the PEI parameter set 2 may be carried by PDCCH-ConfigCommon. Here, the PDCCH-ConfigCommon may be carried in a system message. For example, the PDCCH-ConfigCommon may be carried in a system information block 1 (SIB1).

In a possible implementation, the PEI parameter set 2 may be carried by pei-ConfigBWP in the PDCCH-ConfigCommon.

The base station may send the PEI monitoring indication information to the UE, and the UE after receiving the PEI monitoring indication information may determine the PEI parameter set associated with the specific downlink initial BWP.

Therefore, instead of that a plurality of downlink initial BWP use a same PEI parameter set, the specific downlink initial BWP may be individually configured with the PEI parameter set by determining the PEI parameter set associated with the specific downlink initial BWP, which improves the configuration flexibility of the PEI parameter set and meets the requirements of different downlink initial BWPs for PEI parameter sets.

In an embodiment, the specific downlink initial BWP includes at least one of:

a downlink initial BWP configured with a paging search space;

a downlink initial BWP including a transmission resource of a first type of control resource set #0 (CORESET#0), wherein the first type of CORESET#0 is associated with at least a first type of UE;

a downlink initial BWP including a transmission resource of a second type of CORESET#0, wherein the second type of CORESET#0 is associated with a second type of UE, and the first type of UE is different from the second type of UE;

a downlink initial BWP configured with a cell defining-synchronization signal block (CD-SSB);

a downlink initial BWP configured with a non cell defining-synchronization signal block (NCD-SSB);

a downlink initial BWP including the transmission resource of the first type of CORESET#0 and configured with the CD-SSB; or

a downlink initial BWP including the transmission resource of the second type of CORESET#0 and configured with the CD-SSB.

Here, the PEI parameter set may be conditionally configured, i.e. the PEI parameter set is configured for the downlink initial BWP only if the downlink initial BWP satisfies the above condition.

Here, the PEI parameter set may be optionally configured, i.e., the PEI parameter set is optionally configured for the downlink initial BWP only when the downlink initial BWP satisfies the above condition. In the event that the above condition is not satisfied, it is not allowed to configure the PEI parameter set for the downlink initial BWP.

The PEI parameter set is configured to indicate the monitoring resources of the PEI, and the PEI is configured to indicate to the UE whether or not it needs to monitor a predetermined PO. Here, the predetermined PO may include one or more POs after the PEI.

Therefore, for the downlink initial BWP, if the UE is required to monitor the PEI, the PEI parameter set is configured. For example, if the downlink initial BWP does not have a paging message, then the UE does not need to monitor the paging message, much less the PEI, and thus the PEI parameter set may not be configured.

Here, the first type of CORESET#0 may be CORESET#0 for the first type of UE and the second type of UE.

The first type of UE may be a non-reduced capability UE, such as an eMMB UE.

The second type of CORESET#0 may be CORESET#0 for the second type of UE. e.g., the second type of CORESET#0 may be CORESET#0 for a reduced capability UE in the 3GPP Release 18 (R18) standard.

In a possible implementation, the downlink initial BWP supported by the first type of UE is greater than or equal to that supported by the second type of UE.

For example, the first type of UE supports a downlink initial BWP greater than or equal to 20 Mhz, and the second type of UE supports a downlink initial BWP less than or equal to 20 Mhz.

In a possible implementation, the bandwidth of the first type of CORESET#0 is greater than the bandwidth of the second type of CORESET#0.

In an embodiment, the second type of UE includes at least one of:

a reduced capability UE; or

an enhanced reduced capability (eRedCap) UE.

For example, when the PEI parameter set associated with the specific downlink initial BWP is configured, the PDCCH-ConfigCommon associated with the downlink initial BWP is required to satisfy the condition indicated by the InitialBWP-Paging in order to configure the PEI parameter set associated with the specific downlink initial BWP. That is, only when the downlink initial BWP satisfies one of the following conditions, the PEI parameter set associated with the specific downlink initial BWP may be optionally configured on the downlink initial BWP. That is, the downlink initial BWP shall satisfy at least one of the following conditions (i.e., the precondition for configuring) in order to optionally configure the PEI parameter set on that downlink initial BWP:

a paging search space (paging-SearchSpace) being configured;

the location and bandwidth (LocationAndBandwith) of the downlink initial BWP including CORESET#0;

the location and bandwidth (LocationAndBandwith) of the downlink initial BWP including CORESET#0 and the downlink initial BWP including CD-SSB; or

the location and bandwidth (LocationAndBandwith) of the downlink initial BWP including CORESET#0, and the downlink initial BWP including SSB (including CD-SSB and NCD-SSB).

In this way, as the PEI parameter set associated with the specific downlink initial BWP is determined, the UE may be indicated with a monitoring resource for PEI, and thus the UE monitor the PEI and then monitor the PO when needed, which saves UE power. On the other hand, the PEI parameter set is not configured on the downlink initial BWP that may not transmit the paging message, which reduces useless configuration and saves resource.

In an embodiment, the specific downlink initial BWP includes a downlink initial BWP for a second type of UE, and the downlink initial BWP for the second type of UE is different from a downlink initial BWP used by a first type of UE.

In a possible implementation, the bandwidth of the downlink initial BWP for the second type of UE is less than or equal to the bandwidth of the downlink initial BWP used by the first type of UE.

Here, it may only determine the configuration condition for the PEI parameter set of the downlink initial BWP (initialDownlinkBWP-RedCap) for the second type of UE. The second type of UE may include the eRedCap UE in the 3GPP Release 17 (R17) standard and the eRedCap UE in the 3GPP Release 18 (R18) standard.

In a possible implementation, the downlink initial BWP used by the first type of UE already satisfies the above PEI configuration parameter precondition by default.

Due to the diversity of the downlink initial BWP for the second type of UE, e.g. not all downlink initial BWPs for the second type of UE have CD-SSB, therefore, a PEI parameter set may be determined for the downlink initial BWP for the second type of UE that satisfies the condition.

The downlink initial BWP for the second type of UE satisfying the condition is the specific downlink initial BWP described above.

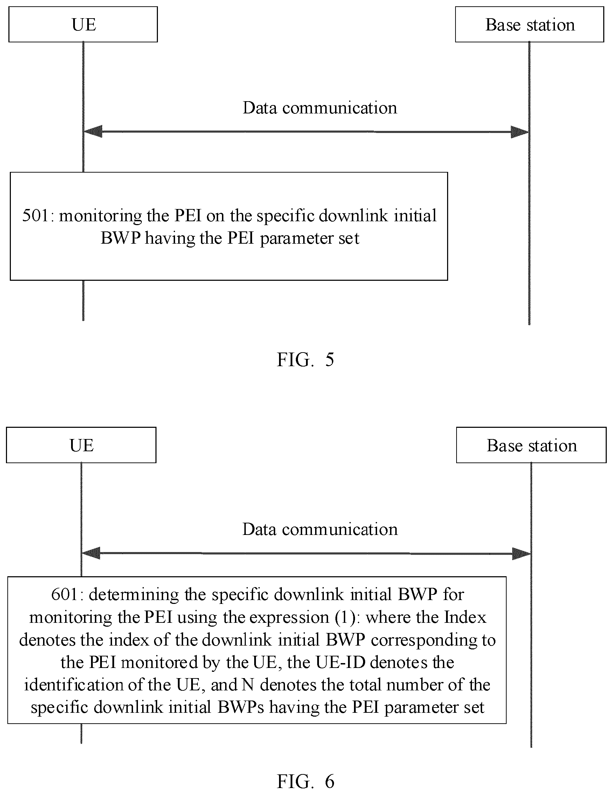

As shown in FIG. 5, an embodiment of the present disclosure provides an information transmitting method performed by a user equipment (UE), which includes:
step 501, monitoring the PEI on the specific downlink initial BWP having the PEI parameter set.

Step 501 may be implemented alone or in combination with step 401.

The base station may send the PEI monitoring indication information to the UE, so that the UE may determine whether the downlink initial BWP has the PEI parameter set.

If the downlink initial BWP has the PEI parameter set, the UE may monitor the PEI based on the PEI parameter set.

If the downlink initial BWP does not have the PEI parameter set, the UE may not monitor the PEI, e.g., the UE may monitor all POs.

As shown in FIG. 6, an embodiment of the present disclosure provides an information transmitting method performed by a user equipment (UE), which includes:
step 601, determining the specific downlink initial BWP for monitoring the PEI using the expression (1):
where the Index denotes the index of the downlink initial BWP corresponding to the PEI monitored by the UE, the UE-ID denotes the identification of the UE, and N denotes the total number of the specific downlink initial BWPs having the PEI parameter set.

Step 601 may be implemented alone or in combination with step 401 and/or step 501.

There may be a plurality of specific downlink initial BWPs having the PEI parameter set, and the base station may set a paging message for the UE in one of the specific downlink initial BWPs, and the base station may determine, based on the expression (1), the specific downlink initial BWP over which the paging message is to be sent. The UE determines the specific downlink initial BWP based on the same rule and monitors the PEI on the specific downlink initial BWP.

In an embodiment, monitoring the PEI on the specific downlink initial BWP having the PEI parameter set includes:
selecting, based on the type of UE, the specific downlink initial BWP corresponding to the type of UE to monitor the PEI.

The UE may monitor, based on its own type, the specific downlink initial BWP corresponding to its own type.

In a possible implementation, the UE monitors the downlink initial BWP based on a predetermined rule.

The predetermined rule may include that the UE monitors the specific downlink initial BWP corresponding to its own type.

For example, as the RedCap UE supports the downlink initial BWP with a small bandwidth (e.g., less than 20 MHz), the base station may configure a downlink initial BW (e.g., with a bandwidth of 5M) for the RedCap UE. The RedCap UE may select the specific downlink initial BWP for the RedCap UE to monitor the PEI.

To further explain any embodiment of the present disclosure, a specific embodiment is provided below.

1. It protects the way in which the network configures the PEI parameter set:

    a) the specific PEI parameter set is associated with the downlink initial BWP configuration;
    b) as an embodiment, the PEI parameter set is pei-ConfigBWP; and
    c) as an embodiment, the PEI parameter set carries the search space for PEI monitoring and the first monitoring occasion of the PEI.

2. The protocol may define that the specific PEI parameter set may be configured only on the following initial BWPs (the EI parameter set may be configured on the downlink initial BWP that satisfies one of the followings):

a) the downlink initial BWP configured with a paging-SearchSpace;

b) the downlink initial BWP including entire CORESET#0 (first type of CORESET#0)/ CORESET#0-bis (second type of CORESET#0); (where the CORESET#0-bis is the second type of CORESET#0, i.e. the $0^{th}$ control resource set introduced by the subsequent R18 Redcap UE);

c) the downlink initial BWP including entire CORESET#0/ CORESET#0-bis and CD-SSB;

d) the downlink initial BWP configured with CD-SSB; and

e) the downlink initial BWP configured with CD-SSB or NCD-SSB.

3. The protocol defines that the condition for the specific PEI parameter set being only on the following initial BWPs is that the downlink initial BWP is configured for a specific type (e.g., initialDownlinkBWP-RedCap):

a) as an embodiment, the specific type of terminal is a Redcap terminal in R17 or is an eRedcap terminal in R18.

4. The terminal selects the downlink initial BWP to monitor the paging message, and if there is no specific PEI parameter set configured on the downlink initial BWP, the terminal does not need to monitor the PEI (i.e., it monitors the POs directly):

a) the terminal selects the downlink initial BWP for monitoring the paging message based on a predetermined rule; and

b) as an embodiment, the predetermined rule may be to perform the modulo operation on the total number of N downlink initial BWPs (all of which are configured with a search space for paging) according to the UE-ID, and to monitor on the corresponding downlink initial BWP according to the index of the modulo operation.

As an embodiment, the predetermined rule may be differentiated according to the type of the user, e.g., the Redcap UE monitors the paging message on initialDownlinkBWP-RedCap.

Therefore, in the PDCCH-ConfigCommon, the configuration of the PEI parameter set pei-ConfigBWP-r17 associated with the specific downlink initial BWP is in the pre-description condition Cond InitialBWP-Paging. With respect to the InitialBWP-Paging, it needs to explain that the PEI parameter set pei-ConfigBWP-r17 associated with the downlink initial BWP can be optionally configured on only the downlink initial BWP satisfying a specific precondition. The following are some embodiments of the explanation of the preconditions of InitialBWP-Paging.

Embodiment 1:

| InitialBWP-Paging | This field is optionally present, Need R, if this BWP is t he initialDownlinkBWP or initialDownlinkBWP-RedCap co nfigured with a Paging-SearchSpace , and pei-Config is configured in DownlinkConfigCommo nSIB. Otherwise this field is absent. |
| --- | --- |

That is:

| InitialBWP-Paging | This field (pei-ConfigBWP-r17) is optionally present, Nee d R, if this BWP is the initialDownlinkBWP or initialDo wnlinkBWP-RedCap configured with a Paging-SearchSpace , and pei-Config (PEI configuration parameter set 1) is c onfigured in DownlinkConfigCommonSIB. Otherwise this field (pei-ConfigBWP-r17) is absent. |
| --- | --- |

Embodiment 2:

| InitialBWP-Paging | This field is optionally present, Need R, if this BWP is t he initialDownlinkBWP or initialDownlinkBWP-RedCap w ith its locationAndBandwidth of this BWP contains the en tire CORESET#0, and pei-Config is configured in Downli nkConfigCommonSIB. Otherwise this field is absent. |
| --- | --- |

That is:

| InitialBWP-Paging | This field (pei-ConfigBWP-r17) is optionally present, Nee d R, if this BWP is the initialDownlinkBWP or initialDo wnlinkBWP-RedCap, and the locationAndBandwidth of thi s BWP or this BWP contains the entire CORESET#0, a nd pei-Config is configured in DownlinkConfigCommonSI B. Otherwise this field (pei-ConfigBWP-r17) is absent. |
|---|---|

Embodiment 3:

| InitialBWP-Paging | This field is optionally present, Need R, if this BWP is t he initialDownlinkBWP or initialDownlinkBWP-RedCap w hich includes CD-SSB and the entire CORESET#0 , and pei-Config is configured in DownlinkConfigCommo nSIB. Otherwise this field is absent. |
|---|---|

That is:

| InitialBWP-Paging | This field (pei-ConfigBWP-r17) is optionally present, Nee d R, if this BWP is the initialDownlinkBWP or initialDo wnlinkBWP-RedCap, and the locationAndBandwidth of thi s BWP or this BWP includes the entire CORESET#0 and CD-SSB, and pei-Config is configured in DownlinkConfi gCommonSIB. Otherwise this field is absent. |
|---|---|

Embodiment 4:

| InitialBWP-Paging | This field is optionally present, Need R, if this BWP is t he initialDownlinkBWP or initialDownlinkBWP-RedCap w hich includes SSB(CD SSB or NCD-SSB), and pei-Config is configured in DownlinkConfigCommonSIB. Otherwise this field is absent. |
|---|---|

That is:

| *InitialBWP-Paging* | This field (pei-ConfigBWP-r17) is optionally present, Nee d R, if this BWP is the initialDownlinkBWP or initialDo wnlinkBWP-RedCap which includes SSB (CD SSB or NC D-SSB), and pei-Config is configured in DownlinkConfig CommonSIB. Otherwise this field (pei-ConfigBWP-r17) is absent. |
|---|---|

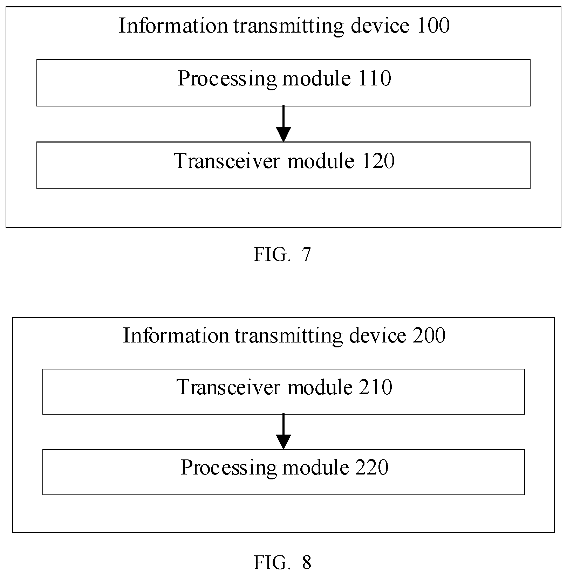

As shown in FIG. 7, an embodiment of the present disclosure provides an information transmitting device 100 provided in a base station, which includes:

a processing module 110, configured to determine a paging earlier indication (PEI) parameter set associated with a specific downlink initial BWP, wherein the PEI parameter set is at least configured for a user equipment (UE) to determine a monitoring resource for a PEI associated with the specific downlink initial BWP.

In an embodiment, the device further includes:

a transceiver module 120, configured to send, to the UE, the PEI monitoring indication information indicating the PEI parameter set.

In an embodiment, the specific downlink initial BWP includes at least one of:

a downlink initial BWP configured with a paging search space;
a downlink initial BWP including a transmission resource of a first type of control resource set #0 (CORESET#0), wherein the first type of CORESET#0 is associated with at least a first type of UE;
a downlink initial BWP including a transmission resource of a second type of CORESET#0, wherein the second type of CORESET#0 is associated with a second type of UE, and the first type of UE is different from the second type of UE;
a downlink initial BWP configured with a cell defining-synchronization signal block (CD-SSB);

a downlink initial BWP configured with a non cell defining-synchronization signal block (NCD-SSB);
a downlink initial BWP including the transmission resource of the first type of CORESET#0 and configured with the CD-SSB; or
a downlink initial BWP including the transmission resource of the second type of CORESET#0 and configured with the CD-SSB.

In an embodiment, the specific downlink initial BWP includes a downlink initial BWP for a second type of UE, and the downlink initial BWP for the second type of UE is different from a downlink initial BWP used by a first type of UE.
In an embodiment, the second type of UE includes at least one of:

a reduced capability UE; or
an enhanced reduced capability UE.

As shown in FIG. 8, an embodiment of the present disclosure provides an information transmitting device 100 provided in a UE, which includes:
a transceiver module 210, configured to receive paging earlier indication (PEI) monitoring indication information sent by a base station, wherein the PEI monitoring indication information indicates a PEI parameter set, and the PEI parameter set is associated with a specific downlink initial BWP and is at least configured for the UE to determine a monitoring resource for a PEI associated with the specific downlink initial BWP.
In an embodiment, the specific downlink initial BWP includes at least one of:

a downlink initial BWP configured with a paging search space;
a downlink initial BWP including a transmission resource of a first type of control resource set #0 (CORESET#0), wherein the first type of CORESET#0 is associated with at least a first type of UE;
a downlink initial BWP including a transmission resource of a second type of CORESET#0, wherein the second type of CORESET#0 is associated with a second type of UE, and the first type of UE is different from the second type of UE;
a downlink initial BWP configured with a cell defining-synchronization signal block (CD-SSB);
a downlink initial BWP configured with a non cell defining-synchronization signal block (NCD-SSB);
a downlink initial BWP including the transmission resource of the first type of CORESET#0 and configured with the CD-SSB; or
a downlink initial BWP including the transmission resource of the second type of CORESET#0 and configured with the CD-SSB.

In an embodiment, the specific downlink initial BWP includes a downlink initial BWP for a second type of UE, and the downlink initial BWP for the second type of UE is different from a downlink initial BWP used by a first type of UE.
In an embodiment, the second type of UE includes at least one of:

a reduced capability UE; or
an enhanced reduced capability UE.

In an embodiment, the device further includes:
a transceiver module 220, configured to monitor the PEI on the specific downlink initial BWP having the PEI parameter set.
In an embodiment, the device further includes: a processing module, configured to determine the specific downlink initial BWP for monitoring the PEI by using the following expression:

$$\text{Index} = \text{UE-ID} \bmod N$$

where the Index denotes the index of the downlink initial BWP corresponding to the PEI monitored by the UE, the UE-ID denotes the identification of the UE, and N denotes the total number of the specific downlink initial BWPs having the PEI parameter set.
In an embodiment, the transceiver module 210 is specifically configured to:
select, according to the type of the UE, the specific downlink initial BWP corresponding to the type of the UE to monitor the PEI.
An embodiment of the present disclosure provides a communication device, including:

a processor; and
a memory storing executable instructions of the processor,

wherein the processor is configured to implement the information transmitting method according to any embodiment of the present disclosure by running the executable instructions.

In an embodiment, the communication device may include, but is not limited to, at least one of: a UE or a network device. Here, the network device may include a core network, an access network device, or the like. Here, the access network device may include a base station, and the core network may include an AMF, and an SMF.

Herein, the processor may include various types of storage media, which are non-transitory computer storage media that can continue to keep information stored thereon after the user equipment is powered down.

The processor may be connected to the memory via a bus or the like for reading an executable program stored on the memory, e.g., at least one of the methods shown in FIGS. 2 to 9.

An embodiment of the present disclosure also provides a computer storage medium having stored thereon a computer executable program that, when being executed by the processor, implements the information transmitting method according to any embodiment of the present disclosure, e.g., at least one of the methods as shown in FIGS. 2 to 6.

With respect to the device or storage medium in the above embodiments, the specific manner in which each module performs an operation has been described in detail in the embodiments relating to the method, which will not be described in detail herein.

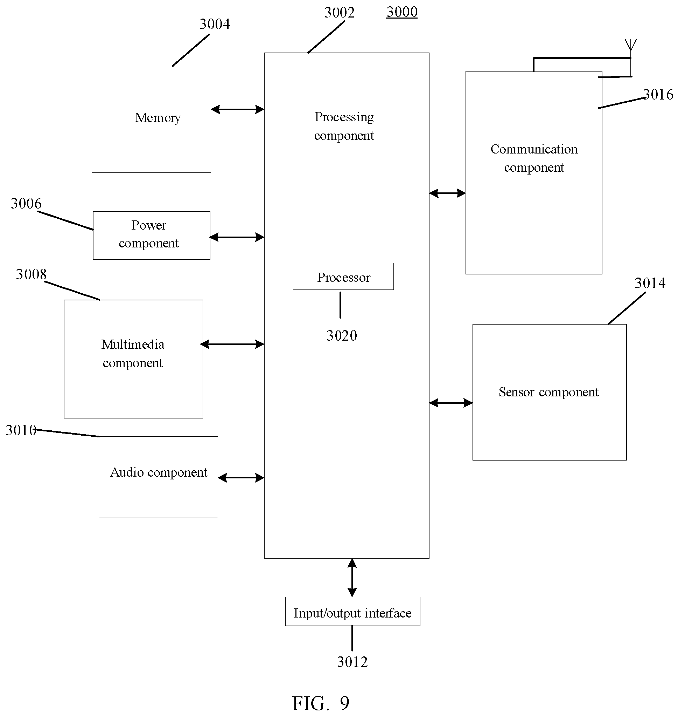

FIG. 9 is a block diagram of a user equipment 3000 according to an exemplary embodiment. For example, the user equipment 3000 may be a mobile phone, a computer, a digital broadcasting user device, a messaging device, a game console, a tablet device, a medical device, a fitness device, a personal digital assistant, or the like.

Referring to FIG. 9, the user equipment 3000 may include one or more of a processing component 3002, a memory 3004, a power component 3006, a multimedia component 3008, an audio component 3010, an input/output (I/O) interface 3012, a sensor component 3014, and a communication component 3016.

The processing component 3002 generally controls the overall operations of the user equipment 3000, such as operations associated with display, telephone calls, data communications, camera operations, and recording operations. The processing component 3002 may include one or more processors 3020 to execute instructions to complete all or part of the steps of the foregoing method. In addition, the processing component 3002 may include one or more modules to facilitate interaction between the processing component 3002 and other components. For example, the processing component 3002 may include a multimedia module to facilitate the interaction between the multimedia component 3008 and the processing component 3002.

The memory 3004 is configured to store various types of data to support the operation of the user equipment 3000. Examples of these data include instructions for any application or method operating on the user equipment 3000, contact data, phone book data, messages, pictures, videos and the like. The memory 3004 may be implemented by any type of volatile or non-volatile storage device or a combination thereof, such as static random access memory (SRAM), electrically erasable programmable read-only memory (EEPROM), erasable and programmable read-only memory (EPROM), programmable read-only memory (PROM), read-only memory (ROM), magnetic memory, flash memory, magnetic disk or optical disk.

The power component 3006 provides power to various components of the user equipment 3000. The power component 3006 may include a power management system, one or more power supplies, and other components associated with generating, managing, and distributing power for the user equipment 3000.

The multimedia component 3008 includes a screen that provides an output interface between the user equipment 3000 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or slide action, but also detect the duration and pressure related to the touch or slide operation. In some embodiments, the multimedia component 3008 includes a front camera and/or a rear camera. When the user equipment 3000 is in an operation mode, such as a shooting mode or a video mode, the front camera and/or the rear camera can receive external multimedia data. Each of the front camera and rear camera may be a fixed optical lens system or have focal length and optical zoom capabilities.

The audio component 3010 is configured to output and/or be input audio signals. For example, the audio component 3010 includes a microphone (MIC), and when the user equipment 3000 is in an operation mode, such as a call mode, a recording mode, and a voice recognition mode, the microphone is configured to receive an external audio signal. The received audio signal can be further stored in the memory 3004 or sent via the communication component 3016. In some embodiments, the audio component 3010 further includes a speaker for outputting audio signals.

The I/O interface 812 provides an interface between the processing component 3002 and a peripheral interface module. The above-mentioned peripheral interface module may be a keyboard, a click wheel, a button, and the like. These buttons may include but are not limited to home button, volume button, start button, and lock button.

The sensor component 3014 includes one or more sensors for providing the user equipment 3000 with various aspects of state evaluation. For example, the sensor component 3014 can detect the on/off status of the user equipment 3000 and the relative positioning of components. For example, the component is a display and keypad of the user equipment 3000. The sensor component 3014 can also detect the position change of the user equipment 3000 or a component of the user equipment 3000, the presence or absence of contact between the user and the user equipment 3000, the orientation or acceleration/deceleration of the user equipment 3000, and the temperature change of the user equipment 3000. The sensor component 3014 may include a proximity sensor configured to detect the presence of nearby objects when there is no physical contact. The sensor component 3014 may also include a light sensor, such as a CMOS or CCD image sensor, for use in imaging applications. In some embodiments, the sensor component 3014 may also include an acceleration sensor, a gyroscope sensor, a magnetic sensor, a pressure sensor, or a temperature sensor.

The communication component 3016 is configured to facilitate wired or wireless communication between the user equipment 3000 and other devices. The user equipment 3000 can access a wireless network based on a communication standard, such as WiFi, 4G, or 5G, or a combination thereof. In an exemplary embodiment, the communication component 3016 receives a broadcast signal or broadcast related information from an external broadcast management system via a broadcast channel. In an exemplary embodiment, the communication component 3016 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the user equipment 3000 may be implemented by one or more of application specific integrated circuit (ASIC), digital signal processor (DSP), digital signal processing device (DSPD), programmable logic devices (PLD), field programmable gate array (FPGA), controller, microcontroller, microprocessor, or other electronic components, to perform the above-mentioned methods.

An exemplary embodiment also provides a non-transitory computer-readable storage medium including instructions, such as the memory 3004 including instructions, and the instructions may be executed by the processor 3020 of the user equipment 3000 to complete the foregoing method. For example, the non-transitory computer-readable storage medium may be ROM, random access memory (RAM), CD-ROM, magnetic tape, floppy disk, optical data storage device and the like.

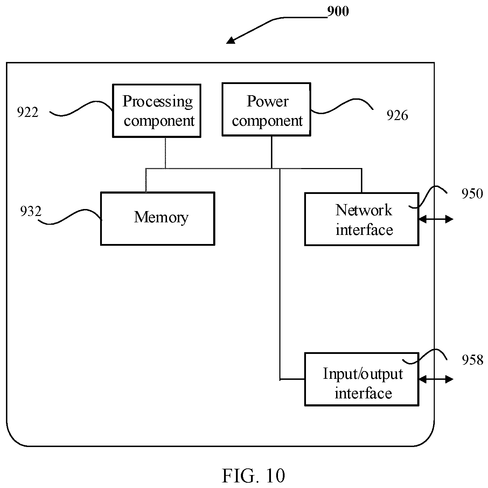

As shown in FIG. 10, an embodiment of the present disclosure illustrates a structure of a base station. For example, the base station 900 may be provided as a network side device. Referring to FIG. 10, the base station 900 includes a processing component 922 which further includes one or more processors, and a memory resource which is represented by a memory 932 and is configured for storing instructions such as application programs executable by the processing component 922. The application program stored in the memory 932 may include one or more modules each corresponding to a set of instructions. Furthermore, the processing component 922 is configured to execute instructions to perform the method applied to the base station among the above methods.

The base station 900 may also include a power component 926 configured to perform power management of the base station 900, a wired or wireless network interface 950 configured to connect the base station 900 to a network, and an input/output (I/O) interface 959. The base station 900 may operate based on an operating system stored in memory 932, such as Windows Server™, Mac OS X™, Unix™, Linux™, Free BSD™ or the like.

A person skilled in the art may easily conceive of other embodiments of the present disclosure upon consideration of the specification and practice of the invention disclosed herein. The present disclosure is intended to cover any variations, uses, or adaptations of the present disclosure that follow the general principles of the present disclosure and include the common general knowledge or conventional technical means in the technical field not disclosed by the present disclosure. The specification and embodiments are to be regarded as exemplary only, and the true scope and spirit of the present disclosure are indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

**Claims**

1.  An information transmitting method, performed by a base station, comprising:
    determining a paging earlier indication, PEI, parameter set associated with a specific downlink initial bandwidth part, BWP, wherein the PEI parameter set is at least configured for a user equipment, UE, to determine a monitoring resource for a PEI associated with the specific downlink initial BWP.

2.  The method according to claim 1, further comprising:
    sending, to the UE, the PEI monitoring indication information indicating the PEI parameter set.

3.  The method according to claim 1, wherein the specific downlink initial BWP comprises at least one of:

a downlink initial BWP configured with a paging search space;

a downlink initial BWP comprising a transmission resource of a first type of control resource set #0, CORESET#0, wherein the first type of CORESET#0 is associated with at least a first type of UE;

a downlink initial BWP comprising a transmission resource of a second type of CORESET#0, wherein the second type of CORESET#0 is associated with a second type of UE, and the first type of UE is different from the second type of UE;

a downlink initial BWP configured with a cell defining-synchronization signal block, CD-SSB;

a downlink initial BWP configured with a non cell defining-synchronization signal block, NCD-SSB;

a downlink initial BWP comprising the transmission resource of the first type of CORESET#0 and configured with the CD-SSB; or

a downlink initial BWP comprising the transmission resource of the second type of CORESET#0 and configured with the CD-SSB.

4. The method according to any one of claims 1 to 3, wherein the specific downlink initial BWP comprises a downlink initial BWP for a second type of UE, and the downlink initial BWP for the second type of UE is different from a downlink initial BWP used by a first type of UE.

5. The method according to claim 4, wherein the second type of UE comprises at least one of:

a reduced capability UE; or
an enhanced reduced capability UE.

6. An information transmitting method, performed by a user equipment, UE, comprising:
receiving paging earlier indication, PEI, monitoring indication information sent by a base station, wherein the PEI monitoring indication information indicates a PEI parameter set, and the PEI parameter set is associated with a specific downlink initial bandwidth part, BWP, and is at least configured for the UE to determine a monitoring resource for a PEI associated with the specific downlink initial BWP.

7. The method according to claim 6, wherein the specific downlink initial BWP comprises at least one of:

a downlink initial BWP configured with a paging search space;

a downlink initial BWP comprising a transmission resource of a first type of control resource set #0, CORESET#0, wherein the first type of CORESET#0 is associated with at least a first type of UE;

a downlink initial BWP comprising a transmission resource of a second type of CORESET#0, wherein the second type of CORESET#0 is associated with a second type of UE, and the first type of UE is different from the second type of UE;

a downlink initial BWP configured with a cell defining-synchronization signal block, CD-SSB;

a downlink initial BWP configured with a non cell defining-synchronization signal block, NCD-SSB;

a downlink initial BWP comprising the transmission resource of the first type of CORESET#0 and configured with the CD-SSB; or

a downlink initial BWP comprising the transmission resource of the second type of CORESET#0 and configured with the CD-SSB.

8. The method according to claim 6, wherein the specific downlink initial BWP comprises a downlink initial BWP for a second type of UE, and the downlink initial BWP for the second type of UE is different from a downlink initial BWP used by a first type of UE.

9. The method according to claim 8, wherein the second type of UE comprises at least one of:

a reduced capability UE; or
an enhanced reduced capability UE.

10. The method according to any one of claims 6 to 9, further comprising:
monitoring the PEI on the specific downlink initial BWP having the PEI parameter set.

11. An information transmitting device, provided in a base station, comprising:
a processing module, configured to determine a paging earlier indication, PEI, parameter set associated with a specific downlink initial bandwidth part, BWP, wherein the PEI parameter set is at least configured for a user equipment, UE, to determine a monitoring resource for a PEI associated with the specific downlink initial BWP.

12. The device according to claim 11, further comprising:
a transceiver module, configured to send, to the UE, the PEI monitoring indication information indicating the PEI parameter set.

13. The device according to claim 11, wherein the specific downlink initial BWP comprises at least one of:

a downlink initial BWP configured with a paging search space;
a downlink initial BWP comprising a transmission resource of a first type of control resource set #0, CORESET#0, wherein the first type of CORESET#0 is associated with at least a first type of UE;
a downlink initial BWP comprising a transmission resource of a second type of CORESET#0, wherein the second type of CORESET#0 is associated with a second type of UE, and the first type of UE is different from the second type of UE;
a downlink initial BWP configured with a cell defining-synchronization signal block, CD-SSB;
a downlink initial BWP configured with a non cell defining-synchronization signal block, NCD-SSB;
a downlink initial BWP comprising the transmission resource of the first type of CORESET#0 and configured with the CD-SSB; or
a downlink initial BWP comprising the transmission resource of the second type of CORESET#0 and configured with the CD-SSB.

14. The device according to any one of claims 11 to 13, wherein the specific downlink initial BWP comprises a downlink initial BWP for a second type of UE, and the downlink initial BWP for the second type of UE is different from a downlink initial BWP used by a first type of UE.

15. The device according to claim 14, wherein the second type of UE comprises at least one of:

a reduced capability UE; or
an enhanced reduced capability UE.

16. An information transmitting device, provided in a user equipment, UE, comprising:
a transceiver module, configured to receive paging earlier indication, PEI, monitoring indication information sent by a base station, wherein the PEI monitoring indication information indicates a PEI parameter set, and the PEI parameter set is associated with a specific downlink initial bandwidth part, BWP, and is at least configured for the UE to determine a monitoring resource for a PEI associated with the specific downlink initial BWP.

17. The device according to claim 16, wherein the specific downlink initial BWP comprises at least one of:

a downlink initial BWP configured with a paging search space;
a downlink initial BWP comprising a transmission resource of a first type of control resource set #0, CORESET#0, wherein the first type of CORESET#0 is associated with at least a first type of UE;
a downlink initial BWP comprising a transmission resource of a second type of CORESET#0, wherein the second type of CORESET#0 is associated with a second type of UE, and the first type of UE is different from the second type of UE;
a downlink initial BWP configured with a cell defining-synchronization signal block, CD-SSB;
a downlink initial BWP configured with a non cell defining-synchronization signal block, NCD-SSB;
a downlink initial BWP comprising the transmission resource of the first type of CORESET#0 and configured with the CD-SSB; or
a downlink initial BWP comprising the transmission resource of the second type of CORESET#0 and configured with the CD-SSB.

18. The device according to claim 16, wherein the specific downlink initial BWP comprises a downlink initial BWP for a second type of UE, and the downlink initial BWP for the second type of UE is different from a downlink initial BWP used by a first type of UE.

19. The device according to claim 18, wherein the second type of UE comprises at least one of:

a reduced capability UE; or

an enhanced reduced capability UE.

20. The device according to any one of claims 16 to 19, further comprising:
    a transceiver module, configured to monitor the PEI on the specific downlink initial BWP having the PEI parameter set.

21. A communication device, comprising:

    a processor; and
    a memory storing executable instructions of the processor,
    wherein the processor is configured to implement the information transmitting method according to any one of claims 1 to 5 or 6 to 10 by running the executable instructions.

22. A computer storage medium having a computer executable program stored thereon that, when being executed by a processor, implements the information transmitting method according to any one of claims 1 to 5 or 6 to 10.

FIG. 1

UE

Base station

Data communication

201: determining a PEI parameter set associated with a specific downlink initial BWP, wherein the PEI parameter set is at least configured for a UE to determine a monitoring resource for a PEI associated with the specific downlink initial BWP

FIG. 2

UE            Base station

Data communication

301: sending, to the UE, the PEI monitoring indication
information indicating the PEI parameter set

FIG. 3

UE            Base station

Data communication

401: receiving PEI monitoring indication information
sent by a base station, wherein the PEI monitoring
indication information indicates a PEI parameter set,
and the PEI parameter set is associated with a specific
downlink initial BWP and is at least configured for the
UE to determine a monitoring resource for a PEI
associated with the specific downlink initial BWP

FIG. 4

UE          Base station

Data communication

501: monitoring the PEI on the specific downlink initial BWP having the PEI parameter set

FIG. 5

UE          Base station

Data communication

601: determining the specific downlink initial BWP for monitoring the PEI using the expression (1): where the Index denotes the index of the downlink initial BWP corresponding to the PEI monitored by the UE, the UE-ID denotes the identification of the UE, and N denotes the total number of the specific downlink initial BWPs having the PEI parameter set

FIG. 6

Information transmitting device 100

Processing module 110

↓

Transceiver module 120

FIG. 7

Information transmitting device 200

Transceiver module 210

↓

Processing module 220

FIG. 8

FIG. 9

900

922 Processing component    Power component    926

932 Memory    Network interface    950

Input/output interface    958

FIG. 10

## INTERNATIONAL SEARCH REPORT

| | International application No. |
|---|---|
| | **PCT/CN2022/111272** |

| **A.** | **CLASSIFICATION OF SUBJECT MATTER** |
|---|---|
| | H04W 68/02(2009.01)i |

According to International Patent Classification (IPC) or to both national classification and IPC

| **B.** | **FIELDS SEARCHED** |
|---|---|

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 寻呼提前指示, 寻呼早期指示, 参数, 资源, 带宽部分, 降低能力, 能力降低, 监听, PEI, resource, BWP, Redcap, monitor, pag+, early, earlier, indicat+, reduced, capability, CORESET

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 112205009 A (BEIJING XIAOMI MOBILE SOFTWARE CO., LTD.) 08 January 2021 (2021-01-08)<br>        description, paragraphs 40-84 | 1-22 |
| A | CN 114554596 A (VIVO MOBILE COMMUNICATION CO., LTD.) 27 May 2022 (2022-05-27)<br>        entire document | 1-22 |
| A | US 2022225237 A1 (QUALCOMM INC.) 14 July 2022 (2022-07-14)<br>        entire document | 1-22 |
| A | WO 2022007876 A1 (MEDIATEK INC.) 13 January 2022 (2022-01-13)<br>        entire document | 1-22 |
| A | CN 113170282 A (BEIJING XIAOMI MOBILE SOFTWARE CO., LTD.) 23 July 2021 (2021-07-23)<br>        entire document | 1-22 |
| A | ERICSSON. "Design of Paging Enhancements"<br>*3GPP TSG-RAN WG1 Meeting #104-e, R1-2101555*, 05 February 2021 (2021-02-05),<br>        entire document | 1-22 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 January 2023** | **28 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/111272**

| Patent document cited in search report | | | Publication date (day/month/year) | Patent family member(s) | | | Publication date (day/month/year) |
|---|---|---|---|---|---|---|---|
| CN | 112205009 | A | 08 January 2021 | WO | 2022011609 | A1 | 20 January 2022 |
| CN | 114554596 | A | 27 May 2022 | WO | 2022111534 | A1 | 02 June 2022 |
| US | 2022225237 | A1 | 14 July 2022 | WO | 2022155642 | A1 | 21 July 2022 |
| WO | 202007876 | A1 | 13 January 2022 | None | | | |
| CN | 113170282 | A | 23 July 2021 | WO | 2022178820 | A1 | 01 September 2022 |

Form PCT/ISA/210 (patent family annex) (January 2015)